# EUROPÄISCHE PATENTSCHRIFT

(11) **EP 2 189 627 B1**
(45) Veröffentlichungstag und Bekanntmachung des Hinweises auf die Patenterteilung: **22.04.2015**
(21) Anmeldenummer: 09176080.1
(22) Anmeldetag: 16.11.2009
(51) Int. Cl.: B29C 65/48, B29C 65/00, B08B 7/00, B29C 70/08, B29L 31/08, F01D 5/28, F04D 29/02, F04D 29/38, F04D 29/54, B29L 31/00, F01D 5/14, F04D 29/32

(54) **Verfahren zur Herstellung hybrider Bauteile für Fluggasturbinen**
Method for the manufacture of hybrid components for aircraft gas turbines
Procédé de fabrication des composantes hybrides pour moteurs de turbine à gaz

(30) Priorität: 25.11.2008 DE 102008058913
(43) Veröffentlichungstag der Anmeldung: 26.05.2010
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)

(56) Entgegenhaltungen:
- EP-A1- 1 135 540
- EP-A1- 1 529 765
- EP-A1- 1 570 921
- EP-A2- 1 939 402

## Beschreibung

Die Erfindung betrifft ein Verfahren zur Herstellung der Fan- oder Leitschaufeln der Fanstruktur einer Fluggasturbine, bei dem eine Metallstruktur mit einer aus einem Faserverbundwerkstoff bestehenden Tragstruktur verbunden wird.

Es ist bekannt, bestimmte Bauteile einer Fluggasturbine, beispielsweise die Fanschaufeln und die Leitschaufeln des dem Fan nachgeordneten Leitschaufelgitters, aus Gründen der Gewichtseinsparung und der besseren Schwingungsdämpfung als Hybrid auszubilden, das eine aus Faserverbundwerkstoff bestehende Tragstruktur und eine mit dieser fest verbundene Metallstruktur umfasst.

Beispielsweise aus der DE 10 2006 061 915 A1 sind bereits aus einem Faserverbundmaterial bestehende Fanschaufeln bekannt, die zum einen ein geringes Gewicht aufweisen und zum anderen über eine hohe spezifische Festigkeit und eine hohe Eigendämpfung zur Vermeidung von Schwingungen verfügen. Zur Erzielung einer hohen Erosionsbeständigkeit und Schlagfestigkeit gegenüber auf die Schaufeln auftreffenden Fremdkörpern ist die aus Faserverbundmaterial bestehende Tragstruktur mit einer - diese ganz oder teilweise umhüllenden - Metallstruktur verbunden. Die Verbindung der Tragstruktur mit der metallischen Umhüllung erfolgt durch Verkleben sowie eine Vorspannung der die Metallstruktur bildenden Deckbleche, um so eine möglichst innige und feste Verbindung zwischen dem Metall und dem Faserbundmaterial zu erzielen.

Bei der Herstellung der Leitschaufeln für das Leitschaufelgitter der Fanstruktur wurde bereits vorgeschlagen, eine vorgefertigte Hüllstruktur innerhalb eines Spritzgusswerkzeugs unter einem bestimmten Fülldruck mit dem Faserverbundmaterial zu befüllen und dabei das hybride Bauteil auszuformen, um so unmittelbar durch den eingebrachten Kunststoff und die Druckwirkung eine möglichst feste Verbindung zu erzielen.

Aufgrund der durch Fliehkräfte, Gasdruck und von dem strömenden Medium angeregte Schwingungen sowie durch von auftreffenden Fremdkörpern erzeugte Schlagwirkungen sind jedoch die Fanschaufeln und auch die Leitschaufeln derart hoch belastet, dass sich die Metallstruktur von der Tragstruktur ablösen kann und das hybride Bauteil unbrauchbar wird und ausgetauscht werden muss.

Der Erfindung liegt daher die Aufgabe zugrunde, ein Verfahren zur Herstellung hybrider Bauteile für ein Gasturbinentriebwerk anzugeben, das unter den extremen Belastungsverhältnissen in einem Gasturbinentriebwerk ein Ablösen der Metallstruktur von dem Faserverbundmaterial verhindert.

Erfindungsgemäß wird die Aufgabe mit einem Verfahren gemäß den Merkmalen des Patentanspruchs 1 gelöst. Zweckmäßige Weiterbildungen der Erfindung sind Gegenstand der Unteransprüche.

Der Kern der Erfindung, die sich allgemein auf die Herstellung hybrider Bauteile und hier insbesondere auf eine von metallischen Deckblechen umhüllte, aus Faserverbundmaterial bestehende Tragstruktur der Fan- oder Leitschaufeln einer Fluggasturbine bezieht, besteht darin, dass die Verbindungsflächen der Metallstruktur vor dem Anfügen des Faserverbundwerkstoffs mit Plasma gereinigt und aufgeraut und die Metallmoleküle so aktiviert werden, dass hohe Anziehungskräfte wirksam sind und eine innige, äußerst feste Adhäsionsverbindung zwischen dem Metall und dem Faserverbundmaterial erzeugt wird. Überraschenderweise wird die Festigkeit der Adhäsionsverbindung gegenüber den bisher bekannten Verbindungen um ein Vielfaches erhöht. Nach diesem Verfahren hergestellte Fan- oder Leitschaufeln der Fanstruktur eines Gasturbinentriebwerks sind in der Lage, hohe Lasten zu übertragen und weisen eine lange Lebensdauer auf.

In Ausgestaltung der Erfindung erfolgt die Plasmabehandlung der metallischen Verbindungsflächen mittels eines aus Düsen austretenden Plasmastroms. Vorzugsweise ist der Plasmastrom ein ionisierter Luftstrom.

In weiterer Ausbildung der Erfindung können die metallischen Verbindungsflächen vor der Plasmabehandlung mechanisch aufgeraut werden.

In vorteilhafter Weiterbildung der Erfindung werden an den Innenflächen mit Plasma behandelte folienartige, ebene Deckbleche miteinander verschweißt und in einem entsprechend der Bauteilgestalt ausgebildeten Werkzeug wird zwischen die beiden Deckbleche mit einem bestimmten Fülldruck ein noch fließfähiges Faserverbundmaterial eingebracht und dabei das Bauteil entsprechend der Werkzeugform ausgeformt.

In weiterer Ausbildung der Erfindung werden entsprechend der Bauteilform vorgeformte Deckbleche an den Innenflächen mit Plasma behandelt und nach dem Einbringen des Fasermaterial miteinander verschweißt und danach wird nach dem RTM-Verfahren ein Kunststoff in das Fasermaterial infiltiert.

Die mit Plasma behandelten Deckbleche können unter Verwendung eines Klebemittels auch mit einer vorgefertigten Tragstruktur aus Faserverbundmaterial verbunden und anschließend an den Kanten miteinander verschweißt werden.

In diesem Fall ist es möglich, auch die Tragstruktur an den Verbindungsflächen wie die Metallstruktur zu behandeln.

Nachfolgend wird das erfindungsgemäße Verfahren anhand einer beispielhaften Ausführungsform zur Herstellung der Leitschaufeln für ein dem Fan einer Fluggasturbine nachgeordnetes Leitschaufelgitter näher erläutert.

Zwei entsprechend der Gestalt der Leitschaufeln zugeschnittene - druck- und saugseitige - ebene, folienartige Deckbleche aus Chrom-Nickel-Stahl werden an der Innenfläche mit einem über die gesamte Fläche geführten, aus einer Düse austretenden Plasmastrahl, hier ionisierter Luft, behandelt. Dabei werden die Innenflächen der Deckbleche gereinigt und - erkennbar an einem matten Erscheinungsbild - aufgeraut. Anschließend werden jeweils ein saug- und ein druckseitiges Deckblech mit einander zugewandten Innenflächen an den Längskanten, das heißt, der späteren Vorder- und Hinterkante der Leitschaufel, miteinander verschweißt. Die so vorbereitete Metallstruktur wird in eine Spritzgussform eingebracht, deren Innenkontur der Außenkontur der dreidimensionalen Leitschaufel entspricht. In der geschlossenen Spritzgussform wird in den zwischen den beiden Deckblechen bestehenden Zwischenraum unter einem bestimmten Druck ein mit einem Fasermaterial versetztes Polyamid eingebracht. Dabei werden die Deckbleche entsprechend der Innenkontur der Spritzgussform umgeformt. Nach der Entnahme aus der Spritzgussform werden die Vorder- und Hinterkanten (Schweißkanten) spanend bearbeitet und die oberen und unteren Schaufelkanten entsprechend der gewünschten Schaufellänge beschnitten. In zahlreichen Untersuchungen wurde festgestellt, dass sich die Festigkeit der Verbindung zwischen der Metallstruktur und dem Kunststoff (Faserverbundmaterial) aufgrund der Oberflächenbehandlung mit ionisierter Luft gegenüber den bekannten Verfahren ohne Plasmabehandlung der Metalloberfläche überraschenderweise dramatisch, das heißt um ein Vielfaches, erhöht und somit eine weitaus längere Lebensdauer der Leitschaufeln erreicht werden kann. Überraschenderweise wurde zudem festgestellt, dass sich die Festigkeit der Verbindung zwischen Metall und Kunststoff nach einem bestimmten Zeitablauf noch weiter erhöht.

Die Erfindung ist nicht auf das zuvor erläuterte Ausführungsbeispiel beschränkt. Auf der Basis des erfindungsgemäßen Reinigens und Aufrauens der Kontaktflächen der Metallstruktur (metallische Hüllstruktur) mit einem Plasmastrahl können auch andere hybride Bauteile, bei denen Metall mit Kunststoff oder Faserverbundmaterial verbunden wird, beispielsweise die hoch belasteten Fanschaufeln der Fluggasturbine, hergestellt werden. Zur Herstellung von Fanschaufeln können beispielsweise entsprechend der dreidimensionalen Schaufelkontur vorgeformte Deckbleche an den Innenflächen zunächst mit dem Plasma aufgeraut und nach dem Einlegen des Fasermaterial miteinander verschweißt werden. Anschließend wird der Kunststoff nach dem RTM-Verfahren in das zwischen den beiden Deckplatten befindliche Fasermaterial infiltriert.

Darüber hinaus ist es auch denkbar, die vorgeformten und an der Innenfläche mit Plasma behandelten Deckplatten mit Hilfe eines Klebemittels mit einer vorgefertigten Tragstruktur aus Faserverbundmaterial zu verbinden. Auch in diesem Fall konnte durch die mittels Plasma bewirkte Einflussnahme auf die Oberflächenausbildung der Metallstruktur eine überraschend feste Verbindung zwischen der Metallstruktur und dem Faserverbundmaterial erzielt werden.

## Patentansprüche

1. Verfahren zur Herstellung der Fan- oder Leitschaufeln der Fanstruktur einer Fluggasturbine, bei dem eine aus Deckblechen gebildete Metallstruktur mit einer aus einem Kunststofffaserverbundwerkstoff bestehenden Tragstruktur adhäsiv verbunden wird, **dadurch gekennzeichnet, dass** die Verbindungsflächen der Metallstruktur vor dem Anfügen des Kunststofffaserverbundwerkstoffs mit Plasma behandelt werden, wodurch die Metalloberfläche gereinigt und aufgeraut wird und die Metallmoleküle aktiviert werden.

2. Verfahren nach Anspruch 1, **dadurch gekennzeichnet, dass** das Plasma mittels eines aus Düsen austretenden Plasmastroms auf die metallischen Verbindungsflächen aufgebracht wird.

3. Verfahren nach Anspruch 2, **dadurch gekennzeichnet, dass** der Plasmastrom ein ionisierter Luftstrom ist.

4. Verfahren nach Anspruch 1, **dadurch gekennzeichnet, dass** die metallischen Verbindungsflächen vor der Plasmabehandlung mechanisch aufgeraut werden.

5. Verfahren nach einem der Ansprüche 1 bis 4, **dadurch gekennzeichnet, dass** an den Innenflächen mit Plasma behandelte folienartige, ebene Deckbleche miteinander verschweißt und in einem entsprechend der Bauteilgestalt ausgebildeten Werkzeug zwischen die beiden Deckbleche mit einem bestimmten Fülldruck ein noch fließfähiges Faserverbundmaterial eingebracht und dabei das Bauteil entsprechend der Werkzeugform ausgeformt wird.

6. Verfahren nach einem der Ansprüche 1 bis 4, **dadurch gekennzeichnet, dass** entsprechend der Bauteilform vorgeformte Deckbleche an den Innenflächen mit Plasma behandelt und nach dem Einbringen des Fasermaterials miteinander verschweißt werden und danach ein Kunststoff in das Fasermaterial infiltiert wird.

7. Verfahren nach einem der Ansprüche 1 bis 4, **dadurch gekennzeichnet, dass** die mit Plasma behandelten Deckbleche unter Verwendung eines Klebemittels mit einer vorgefertigten Tragstruktur aus Faserverbund-material verbunden und anschließend an den Kanten miteinander verschweißt werden.

8. Verfahren nach Anspruch 7, **dadurch gekennzeichnet, dass** die vorgefertigte Tragstruktur aus Kunststofffaserverbundmaterial an den Verbindungsflächen mit der Metallstruktur mit Plasma beaufschlagt wird.

## Claims

1. Method for the manufacture of the fan blades or the stator vanes of the fan structure of an aircraft gas turbine, where a metallic structure formed by sheet-metal covers is adhesively connected to a supporting structure made of a fiber-composite plastic material, **characterized in that** the mating faces of the metallic structure are plasma-treated prior to fitting the fiber-composite plastic material, thereby cleaning and roughening the metal surface and activating the metal molecules.

2. Method in accordance with Claim 1, **characterized in that** the plasma is applied to the metallic mating faces by means of a plasma jet exiting from nozzles.

3. Method in accordance with Claim 2, **characterized in that** the plasma jet is an ionized air stream.

4. Method in accordance with Claim 1, **characterized in that** the metallic mating faces are mechanically roughened prior to the plasma treatment.

5. Method in accordance with one of the Claims 1 to 4, **characterized in that** foil-like, plane sheet-metal covers treated on their inner surfaces with plasma are welded to each other and a still flowable fiber-composite material is introduced between the two sheet-metal covers at a certain filling pressure in a mould conforming to the shape of the component so that the component is formed to the shape of the mould.

6. Method in accordance with one of the Claims 1 to 4, **characterized in that** sheet-metal covers pre-formed according to the shape of the component are treated with plasma on their inner surfaces and, upon introduction of the fiber material, welded to each other, with a plastic material being subsequently infiltrated into the fiber material.

7. Method in accordance with one of the Claims 1 to 4, **characterized in that** the plasma-treated sheet-metal covers are joined to a premanufactured supporting structure made of fiber-composite material using an adhesive and subsequently welded to each other at the edges.

8. Method in accordance with Claim 7, **characterized in that** the premanufactured supporting structure made of fiber-composite plastic material is plasma-treated at the mating faces with the metallic structure.

## Revendications

1. Procédé de fabrication des aubes de soufflante ou des aubes fixes de la structure de soufflante d'une turbine à gaz aéronautique, dans lequel une structure métallique formée de coiffes est reliée par adhérence à une structure portante constituée d'un matériau synthétique renforcé par des fibres, **caractérisé en ce qu'**avant l'adjonction du matériau synthétique renforcé par des fibres, les surfaces de jonction de la structure métallique sont traitées au plasma, de telle sorte que la surface métallique est nettoyée et grattée, et que les molécules métalliques sont activées.

2. Procédé selon la revendication n° 1, **caractérisé en ce que** le plasma est appliqué sur les surfaces de jonction métalliques au moyen d'un flux de plasma sortant de buses.

3. Procédé selon la revendication n° 2, **caractérisé en ce que** le flux de plasma est un flux d'air ionisé.

4. Procédé selon la revendication n° 1, **caractérisé en ce que** les surfaces de jonction métalliques sont grattées mécaniquement avant le traitement au plasma.

5. Procédé selon une des revendications n° 1 à n° 4, **caractérisé en ce que** les coiffes lamellaires, planes, traitées au plasma sur les faces intérieures, sont soudées entre elles et que, entre les deux coiffes, un matériau renforcé par des fibres encore fluide est injecté sous une certaine pression de remplissage dans un moule conçu conformément à la forme du composant, et que ce faisant, le composant est façonné conformément à la forme du moule.

6. Procédé selon une des revendications n° 1 à n° 4, **caractérisé en ce que** les coiffes préformées conformément à la forme du composant sont traitées au plasma sur les faces intérieures et sont soudées entre elles après l'apport du matériau fibreux, et qu'ensuite un matériau synthétique est infiltré dans le matériau fibreux.

7. Procédé selon une des revendications n° 1 à n° 4, **caractérisé en ce que** les coiffes traitées au plasma sont reliées au moyen d'un adhésif à une structure portante préfabriquée constituée d'un matériau renforcé par des fibres, et puis soudées entre elles sur les bords.

8. Procédé selon la revendication n° 7, **caractérisé en ce que** la structure portante préfabriquée constituée d'un matériau synthétique renforcé par des fibres est traitée au plasma sur les surfaces de jonction avec la structure métallique.
